# EUROPEAN PATENT SPECIFICATION

(11) **EP 4 296 502 B1**
(45) Date of publication and mention of the grant of the patent: **25.11.2026**
(21) Application number: 22305925.4
(22) Date of filing: 24.06.2022
(51) Int. Cl.: F03B 11/06

(54) **STATOR FRAME FOOT**
STÄNDERRAHMENFUSS
PIED DE CARCASSE DE STATOR

(43) Date of publication of application: 27.12.2023
(73) Proprietor: GE Renewable Technologies, 38100 Grenoble (FR)
(72) Inventor: WHEBE SPIRIDON, Michel, 5242 BIRR (CH); PINHEIRO, Marcio, 5242 BIRR (CH); BETOLAZA GARCIA, José Felix, 48500 ABENTO-ZIERBENA (ES); DELGADO RUBIO, Josu, 48500 ABENTO-ZIERBENA (ES)
(74) Representative: Santarelli

(56) References cited:
- EP-A1- 0 339 291
- EP-A1- 3 399 212
- WO-A1-2009/142566
- DE-B- 1 197 971

## Description

### TECHNICAL FIELD AND PRIOR ART

Hydropower stations produce electricity from potential energy in water. The most important components in a hydropower plant are a turbine and a generator. The generator converts the potential energy of the water into electrical energy and comprises a stator as a stationary component and a rotor as a rotating component. The stator comprises a stator core (made mainly out of thin electrical varnished lamination) and windings and is supported by a welded structure named stator frame.

The rotor transfers torque from the turbine to the stator through electro/magnetic forces acting in the airgap. The function of the stator frame is to act as the stator core holding structure against the foundations and to support the stator weight. The stator laminations of the stator provide stiffness and act as a conductor in a magnetic circuit.

The stator frame is carried by stator feet which rest on the foundation below the frame. The stator feet are exposed to forces that can be radial, circumferential, and axial, for example forces that arise from the natural weight of the stator core, stator winding, stator frame, upper bracket, top platform and the rotating parts, in case the thrust bearing is above the generator rotor. An example of a stator frame is shown in WO 2009/142566 A1.

Part of radial forces within the stator core can arise from thermal expansion, for example when the stator core is heated to a higher temperature than the stator frame. Such heating arises for example in a regular manner due to electrical losses in the stator. The expanding stator is restricted by the rigid frame structure and friction between frame and foundation elements, leading to structural tensions which may lead to a folding of the stator laminations, also called stator buckling.

The goal of the present invention is to provide an improved stator frame structure fixation on foundations, for reducing such compression tensions in the core and thereby helping to minimize risk of core lamination buckling.

### SUMMARY OF THE INVENTION

To solve the aforementioned problems, the present invention proposes a stator frame for carrying a stator core of a vertical axis hydroelectric generator, the stator frame comprising at least one stator foot for supporting a weight force of the stator frame.

The stator foot comprises a frame side part and a ground side part configured for slidably moving relative to each other. The ground side part and the frame side part are shaped such that the weight force exerted from the stator frame on the stator foot results in a reaction force on the stator frame which is non-parallel to said weight force. Preferably the reaction force has a radially outward oriented component.

The stator frame may also comprise a plurality of stator feet for supporting the weight force of the stator frame. The reaction forces of the stator feet on the stator frame are in this case oriented to expand the stator frame in an outward radial direction.

The ground side part and the frame side part may be shaped such that a component of the reaction force on the stator frame is oriented in a radial direction of the stator frame, preferably in an outward radial direction.

Advantageously, the frame side part and the ground side part each comprise a sliding surface for said slidable movement relative to each other, the ground side part sliding surface and/or the frame side part sliding surface comprising a wedge shape or tooth shape profile.

The stator frame ground side part sliding surface and the frame side part sliding surface may each comprise a wedge shape or tooth shape profile, the wedge or tooth shape profiles being oriented such that the weight force exerted from the stator frame via the frame side part sliding surface on the ground slide part sliding surface results in a reaction force from the ground slide part sliding surface, the reaction force being oriented in an outward radial direction of the stator frame.

The ground side part sliding surface and/or the frame side part sliding surface may comprise a plurality of wedge shape profiles or a sawtooth shape profile.

A combination of a wedge angle size and a friction coefficient may advantageously be chosen such that a sliding relative movement occurs, preferably the wedge angle being 5° or more.

A material to reduce friction, preferably a grease, a teflon or a deva material, may be used on the sliding surface for reducing a sliding friction.

The stator frame may also comprise a driving key between the frame side part and the ground side part, the key being configured to allow a radial relative movement and to prevent a circumferential relative movement between the frame side part and the ground side part.

The stator frame may comprise a fixation bolt between the frame side part and the ground side part, the bolt being configured for allowing radial and circumferential relative movement between the frame side part and the ground side part.

The wedge shape profile or sawtooth profile of the ground side part and/or the frame side part may further be provided as a key insert.

A stator of a vertical axis hydroelectric generator may comprise a stator frame as described beforehand.

Further, a vertical axis hydroelectric generator may comprise a stator frame as described beforehand.

The vertical axis hydroelectric generator may be configured such that the ground side part and the frame side part are shaped such that the reaction force has a radially outward oriented component, wherein the ground side part and the frame side part are shaped such that the radially outward oriented force component has a size such that a thermal compression force on a stator lamination is lower than a force limit where a lamination buckling arises.

A method for refurbishing a vertical axis hydroelectric generator may comprise the step of replacing a foot of a stator frame of the hydroelectric generator with a stator foot comprising a frame side part and a ground side part configured for slidably moving relative to each other. In this case, the ground side part and the frame side part are shaped such that a weight force exerted from the stator frame on the stator foot results in a reaction force on the stator frame which is non-parallel to said weight force, the reaction force having a radially outward oriented component.

### BRIEF DESCRIPTION OF THE DRAWINGS

- Figure 1 shows a stator frame for carrying a stator core of a vertical axis hydroelectric generator,
- figure 2 shows a stator frame (left hand side) and an enlargement of the area surrounding the stator foot (right hand side),
- figure 3 shows an enlarged view of the stator foot resting on a ground foundation (soleplates),
- figure 4 shows a further example of a stator foot,
- figure 5 shows a first example of a stator foot comprising a ground side part plate (soleplate) and a frame side part plate,
- figure 6 shows a second example of a stator foot comprising a ground side part plate (soleplate) and a frame side part plate,
- figure 7 shows a third example of a stator foot comprising a ground side part plate and (soleplate) and a frame side part plate,
- figure 8 shows a fourth example of a stator foot comprising a ground side part plate (soleplate) and a frame side part plate.

### DETAILED DESCRIPTION OF PARTICULAR EMBODIMENTS

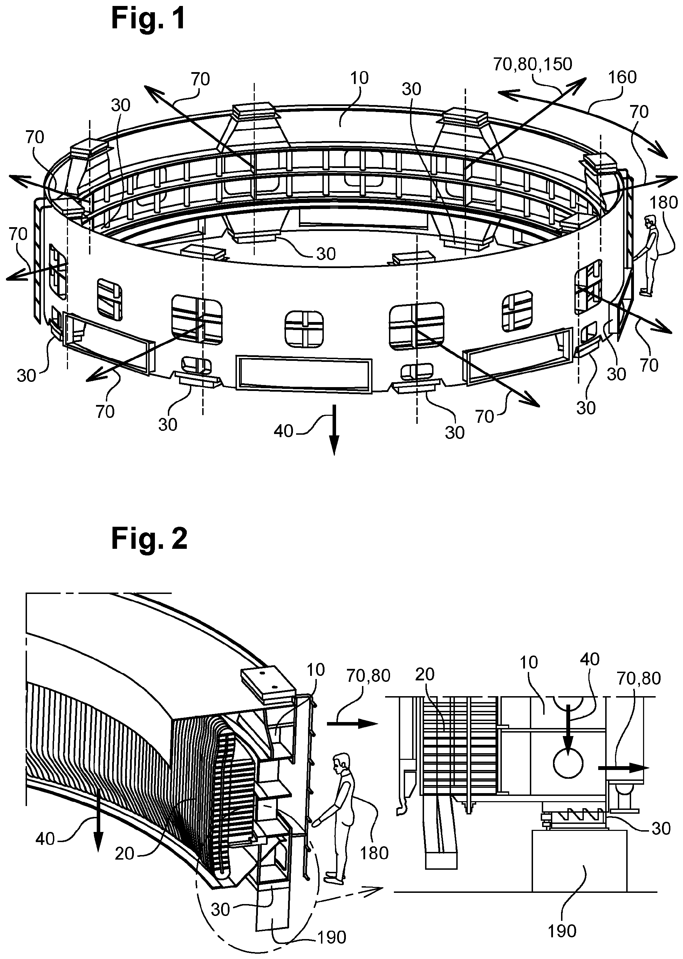

Figure 1 shows a stator frame (10) for carrying a stator core (20) (not shown in figure 1) of a vertical axis hydroelectric generator. An average humane height (180) is indicated for size comparison with typical large hydro driven machines. The average human height may be 180 cm. The stator core and a rotor of the generator are not shown and situated within the circular structure of the stator frame. The stator frame is configured for carrying the stator core i.e. for establishing a contact with a ground to carry the weight of the stator frame. It is also configured for carrying forces originated in the airgap and sustain thermal expansion of the parts comprising the stator. The stator frame therefore comprises one stator foot or more stator feet (30) for supporting a weight force (40) of the stator frame and possibly of other elements supported on the stator frame. Said further weight may be caused by the upper bracket, upper platform, stator core, stator winding, and when there is an axial thrust bearing located above the generator, the weight of the rotating parts as well and the stator frame mass.

The stator foot therefore supports a weight force of the stator frame and of further elements attached to the stator frame or supported on the stator frame, as cited beforehand.

Figure 1 shows a plurality of said stator foot (30) and the weight force of the stator frame (40), carried by the stator foot. According to an aspect of the invention, as will be shown in the following figures, the stator foot comprises a frame side part (50) and a ground side part (60) configured for slidably moving relative to each other. The ground side part (which does not move) and the frame side part (which can move) are shaped such that the weight or axial force (40) exerted from the stator frame (and possibly other elements hanging on the stator frame) on the stator foot results in a reaction force (70) on the stator frame which is non-parallel to said weight force. In figure 1, the reaction force (70) is indicated by arrows in a radial direction (150), wherein "radial" refers to the circular shape of the stator frame. As shown, the reaction force therefore has a radially outward oriented component, non-parallel to the weight force of the stator frame. The reaction force may have no circumferential component. Figure 1 further shows a circumferential (160) direction, also with referring to the circular shape of the stator frame.

When the stator frame is mounted with the stator foot, the ground side part may be solidary to a foundation plate. The foundation plate is for example a concrete or stone structure on the earth floor on which the stator frame rests. The frame side part may be solidary to the stator frame, i.e. the frame side part may move together with the stator frame relative to the ground side part, which rests fixed to the floor via the foundation plate.

Even though figure 1 only shows a radial reaction force component it is imaginable that the ground side part and the frame side part are shaped such that the stator frame weight force results in a reaction force having a radial component and no circumferential component, a circumferential component and no radial component or a radial and circumferential component.

As shown in figure 1, the stator frame comprises a plurality of stator feet for supporting the weight force of the stator frame. In this case, as shown in figure 1, the reaction forces of the stator feet on the stator frame may be oriented to expand the stator frame in an outward radial direction (80). The outward radial direction follows the reaction force vectors (70) shown in figure 1.

During use of the hydroelectric generator, the rotor and stator, as well as further components, experience an increase in temperature. This increase in temperature may not be identical for the stator and the stator frame. Further, the stator which comprises electrically varnished stator lamination and the stator frame are not manufactured from the same materials and are not exposed to the same temperature rises. As a consequence, thermal expansion (and possibly also friction forces from ground fixation of the stator) between the stator core and the stator frame is not identical, leading to internal compression in the stator core lamination. More specifically, the stator lamination experience a greater thermal compression due to the frame retaining the stator core since it has the tendency to thermally expand more than the stator frame. Consequentially, compressive forces arise between the stator frame and the stator, especially the stator lamination. The less expanding stator frame (due to lower temperature rise and friction) exercises a radially inward oriented force from all sides on the stator core thin lamination, while preventing expansion of the stator core lamination. As a result, the stator lamination become "crushed" by the stator frame expansion restriction, resulting in a risk of a phenomena called "stator lamination buckling". The stator lamination can bend (also known as buckling) under the force exercised by the stator frame, when said force exceeds a limit force.

The above described problems are solved by the proposed invention. According to an aspect of the invention, the aforementioned reaction forces of the stator feet on the stator frame oriented to expand the stator frame in an outward radial direction (80) are opposed to said radially inward oriented forces exercised by the stator frame and resulting from thermal expansion, as well as, friction in between statorfeet and foundation plates. As a consequence, both said radial forces partially or completely cancel each other (or even bring a positive outward force in the frame), resulting in a reduced net compression force in-between the stator frame and the stator lamination. The aforementioned stator core lamination buckling can therefore be significantly reduced or suppressed by the invention and a lifetime of the hydroelectric machine can be greatly increased, since buckling has the tendency to expose the stator bars inserted inside the stator core, to force interaction with core lamination, bringing higher risk of premature wear and winding (stator bars) insulation failure.

Consequently, a vertical axis hydroelectric generator can have the ground side part and the frame side part shaped such that the reaction force has a radially outward oriented component. The ground side part and the frame side part may be shaped such that the radially outward oriented force component has a size such that a thermal compression force, arising as explained above, on a stator lamination is lower than a force limit where a lamination buckling arises.

It is also possible to provide a generator already installed with a stator frame foot as described beforehand. Such a method for refurbishing of a vertical axis hydroelectric generator may comprise the step of replacing a foot of a stator frame of the hydroelectric generator with a stator frame foot comprising a frame side part (50) and a ground side part (60) configured for slidably moving relative to each other, as described beforehand.

The ground side part and the frame side part are shaped such that a weight force exerted from the stator frame on the stator foot results in a reaction force on the stator frame which is non-parallel to said weight force, the reaction force having a radially outward oriented component.

An already existing generator displaying problems of stator buckling may therefore be refurbished and a remaining lifespan may be increased.

Figure 2 shows the stator frame (left hand side) and an enlargement of the area surrounding the stator foot (right hand side, indicated by a dashed circle on the left hand side drawing). Features described beforehand are indicated by the same reference signs. Figure 2 also shows the stator core (20) comprising the stator core lamination (horizontally oriented plates indicated on the inner side of the circular structure). As can be seen in figure 2, the stator frame is supported by a ground foundation (190) via the stator foot. The stator frame rests with its complete weight on the stator feet, the stator foot rests on the ground foundation. Therefore, the complete weight force of the stator frame is transferred to the ground via the stator foot. As described beforehand, the weight force (40) exerted from the stator frame on the stator foot results in a reaction force (70) on the stator frame which is non-parallel to said weight force. In figure 2, the weight force is in a vertical direction, whereas the reaction force on the stator frame, exerted via the stator foot, is oriented both in a vertical and in a radially outward oriented direction.

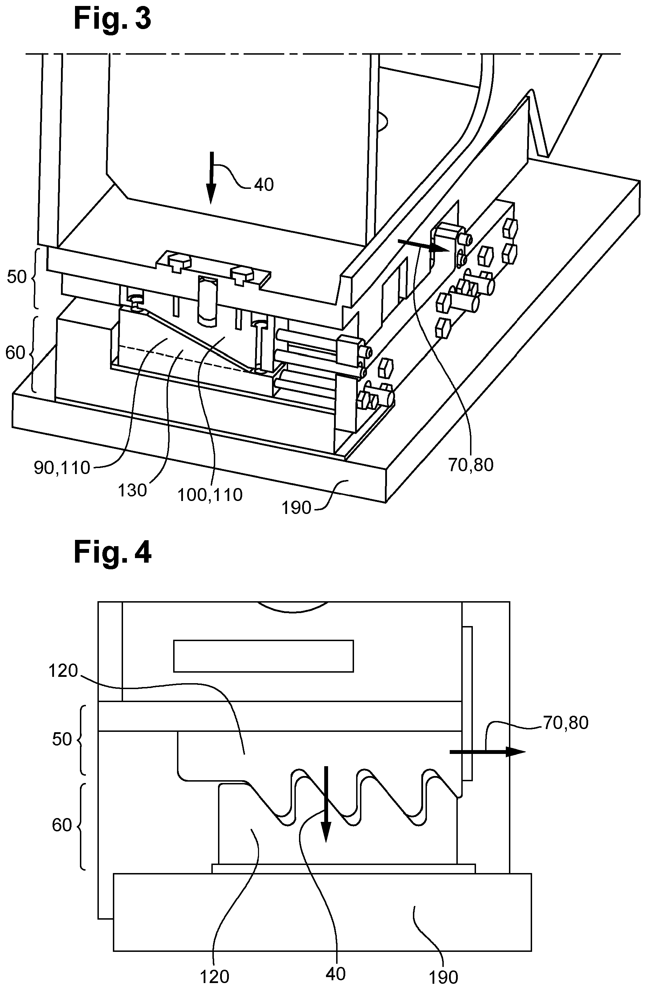

Figure 3 shows an enlarged view of the stator foot resting on the ground foundation. Features described beforehand are indicated by the same reference signs.

The stator foot comprises a frame side part (50) and a ground (soleplate) side part (60) configured for slidably moving relative to each other. As can be seen in figure 2, the frame side part can slide on the ground side part. The ground side part and the frame side part are shaped such that the weight force (40) exerted from the stator frame on the stator foot results in a reaction force (70) on the stator frame which is non-parallel to said weight force. In the example shown in figure 3, the frame side part and the ground side part each comprise a sliding surface for said slidable movement relative to each other.

The sliding surface of the frame side part (100) and the sliding surface of the ground side part (90) are situated on the common contact surface of the frame side part and the ground side part. In the example shown in figure 3, the ground side part sliding surface (90) and the frame side part sliding surface (100) comprise a wedge (or tooth) shape profile (110). In further not shown examples only the ground side part sliding surface (90) or the frame side part sliding surface (100) may comprise a counter wedge (or tooth) shape profile (110). For example, a wedge shape profile on one side could be combined with a sliding pin on the other side to achieve the same force effect described in the following.

As an alternative to said wedge shape profile it is possible to use a tooth shape or sawtooth shape profile. A tooth shape profile can have the form of several wedge shape profiles placed in a row. A tooth shape profile can therefore be a plurality of wedge shape profiles.

As is known from general physics, due to wedge / angular contact between parts, the weight force of the stator frame provokes a reaction force in a direction orthogonal (i.e. normal) to the wedge sliding surface. The vector sum of said weight force and said force in an orthogonal direction to the wedge sliding surface results in a net force in a direction parallel to the wedge sliding surface. Said force in a direction parallel to the wedge sliding surface is further reduced by a friction force. The reaction force, which is the reaction force on the stator frame, is therefore non parallel to the weight force of the stator frame, and is the force remaining after reduction by the friction force. Advantageously, a combination of the wedge angle (130) size and a friction coefficient is chosen such that a sliding relative movement occurs. Preferably, the wedge angle may be 5° or more. The wedge angle (130) is shown in figure 3. Said combination advantageously assures a reaction force even in a presence of a strong friction on the sliding surface. A grease, a teflon or a deva material for reducing a sliding friction may be comprised by the sliding surface. Advantageously, by reducing a friction coefficient, said wedge angle may be smaller and still assure said sliding movement.

Advantageously, the wedge shape profile of the frame side part and/or the wedge shape profile of the ground side part is oriented such that the reaction force has a radially outward oriented component. In other words, the wedge is oriented such that the stator frame would slide in a radial outward direction down the wedge sliding surface, as is shown in figure 3. In summary, the ground side part and the frame side part are shaped such that a component of the reaction force on the stator frame is oriented in a radial direction of the stator frame, preferably in an outward radial direction. Advantageously, a wedge shape is used.

As described beforehand and shown in figure 3, the ground side part sliding surface and the frame side part sliding surface may each comprise a wedge shape profile. The wedge shape profiles are oriented such that the weight force exerted from the stator frame via the frame side part sliding surface on the ground slide part sliding surface results in a reaction force from the ground slide part sliding surface being oriented in an outward radial direction of the stator frame. This allows, as described beforehand, when a plurality of stator foot are provided, that the reaction forces of the stator feet on the stator frame are oriented to expand the stator frame in an outward radial direction (80).

Figure 4 shows a further example of a stator foot. Features described beforehand are indicated by the same reference signs.

In the example shown in figure 4, the ground side part sliding surface and the frame side part sliding surface comprise a plurality of wedge shape profiles or a sawtooth shaped profile (120). It is also possible that only the ground side part sliding surface or the frame side part sliding surface comprises said saw tooth shaped profile. The saw tooth shaped profile comprises a plurality, for example two, three, four or more wedge profiles as described beforehand. Also, as described beforehand, the sliding surface of the sawtooth (or wedge) profile may comprise a friction reducing surface. Further, the wedge angle of one or more of the profiles comprised by the sawtooth or wedge shaped profile may be chosen such that a combination of the wedge angle size and a friction coefficient is chosen such that a sliding relative movement occurs. Preferably, the wedge angle may be 5° or more. It is also possible to choose the combination of all wedge angles and all friction coefficients of the different wedges of the sawtooth profile such that said sliding relative movement occurs. Compared to a single wedge, said sawtooth profile may be mechanically more stable.

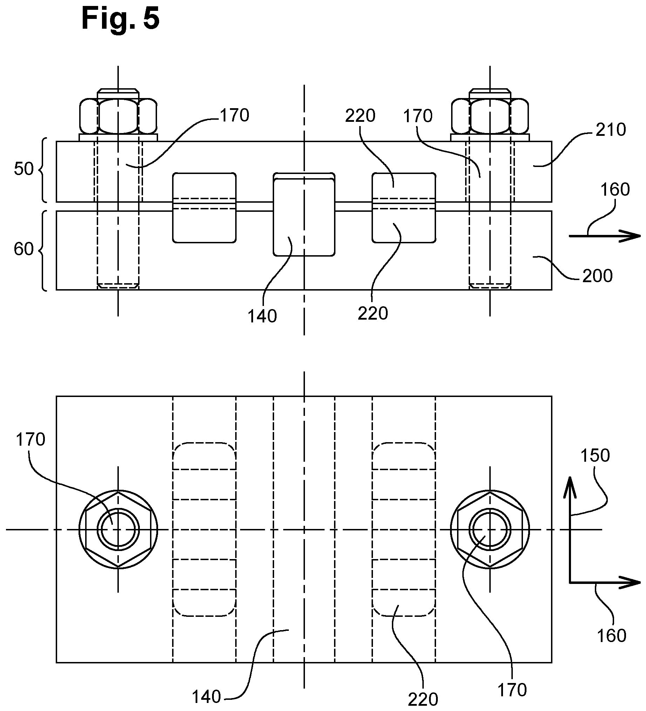

Figures 5, 6, 7 and 8 show further examples of the stator foot. In each figure, in the upper part, a cut view looking in a radial direction i.e. a cut in a plane tangential to the cylindrical structure of the stator frame is shown. In the lower part, a view from the top or bottom i.e. looking along an axial direction of the cylindrical structure of the stator frame is shown. All figures 5, 6, 7 and 8 show the circumferential direction (160) and the radial direction (150) as indicated in figure 1.

As shown in figures 5, 6, 7 and 8, the stator foot may comprise a radial driving key (140) between the frame side part and the ground side part. The driving key may be a rectangular or cylindrical driving key. The driving key is configured to allow a radial (150) relative movement and to prevent a circumferential (160) relative movement between the frame side part and the ground side part. The key may be made out of a rectangular or circular or cylindrical bloc of metallic material which is placed in a slot provided in the ground side part and in the frame side part of the stator foot. In the circumferential direction, the key dimension corresponds to the slot dimension. As the key is placed in the slot of the frame side part and the ground side part, a relative movement of frame side and ground side part in the circumferential direction is blocked by the key. In the radial direction, the slot dimension is larger than the key dimension. Radial movement between frame side and ground side part may therefore occur.

The ground side part and the frame side part of the stator feet may further be connected by fixation bolts (170). The fixation bolts is situated between the frame side part and the ground side part and configured for allowing a radial and circumferential relative movement between the frame side part and the ground side part, however, limiting the axial uplift movement of the stator frame. For example, a hole for receiving the fixation bolt in the ground and frame side part is larger in diameter than the fixation bolt diameter. Thereby, the fixation bolt allows for relative movement.

The aforementioned wedge shape profile or sawtooth profile of the ground side part and/or the frame side part may also be provided as a key insert as shown in figures 5, 6, 7 and 8.

The frame side part and/or ground side part of the stator foot may comprise frame side part plate (210) and/or a ground side part plate (200). A slot may be provided in said plate. A wedge key(220) or sawtooth key (220) may be fitted to the slot i.e. the wedge or sawtooth key dimensions in radial and circumferential direction correspond to the slot dimensions.

As shown in figure 5 the rectangular key (140) for preventing circumferential movement may be situated between the wedge or sawtooth key in a circumferential direction. For each of the frame side plate and/or the ground side plate one, two or more keys may be provided. Figure 5 shows two ground side plate and two frame side plate wedge or sawtooth keys. Figure 5 shows two fixation bolts provided exterior to the key elements.

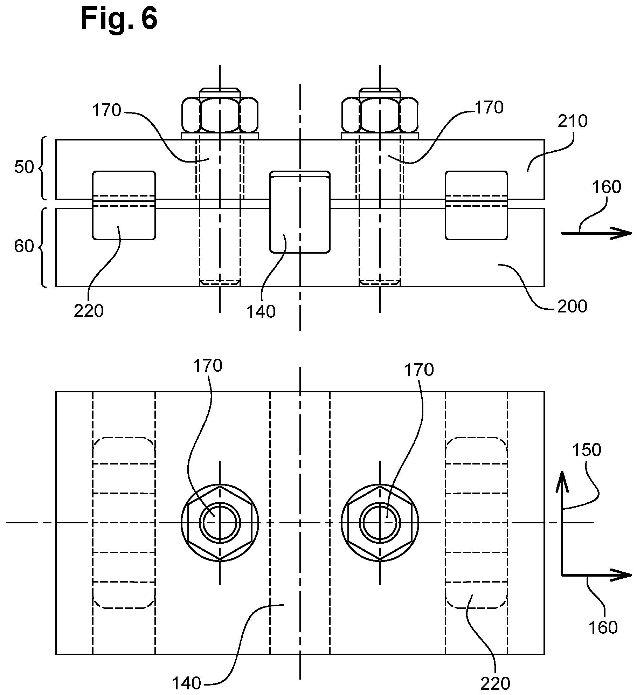

Alternatively, as shown in figure 6, the fixation bolts may be situated between key elements.

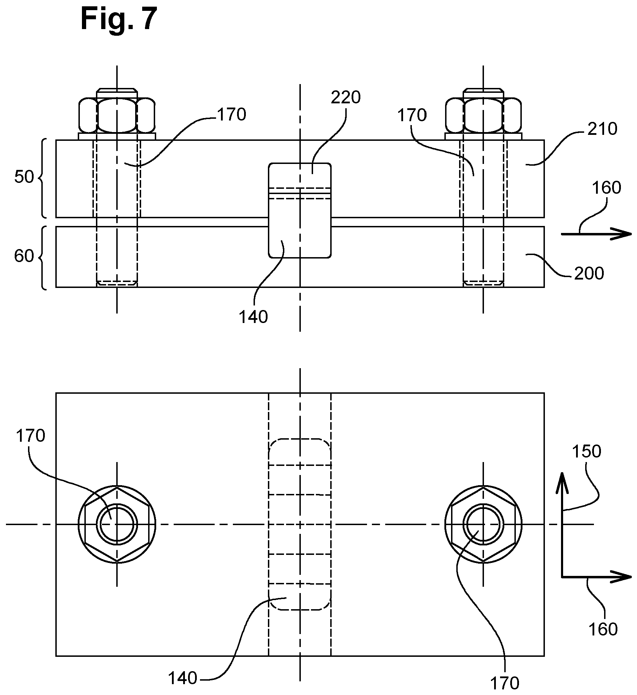

Figure 7 shows a combination of the rectangular key for preventing a movement in a circumferential direction and a wedge shape profile or sawtooth shape profile, provided as a wedge key (220) or sawtooth key (220).

As shown in figure 7, the rectangular key is provided on one of its sides, a side facing the ground side plate or a side facing the frame side plate, with a wedge shape profile or with a sawtooth shape profile. Further, a wedge shaped key (220) or a sawtooth shaped key (220) is provided.

As described beforehand, the stator foot comprises a ground side part plate and a frame side part plate. In one of said plates, for example the ground side part plate, a fitting slot for the rectangular key is provided. The key dimension in the circumferential direction and in the radial direction corresponds to the slot dimension in the circumferential and radial direction provided in said plate. In the other one of said plates, for example the frame side part plate, a slot fitting the rectangular key in the circumferential direction is provided. In the radial direction, said slot has a larger dimension than the key dimension. Within this slot, shown in the upper plate in figure 7 (upper figure part, frame side part plate), a further additional slot is provided for fittingly receiving the wedge shaped key or the sawtooth shaped key. In other words, the dimensions of the wedge or sawtooth shaped key in a radial and circumferential direction corresponds to the dimensions of said additional slot, for example in the frame side part plate. The side of the rectangular key provided with the wedge or sawtooth shaped profile faces this wedge shaped key insert or sawtooth shaped key insert.

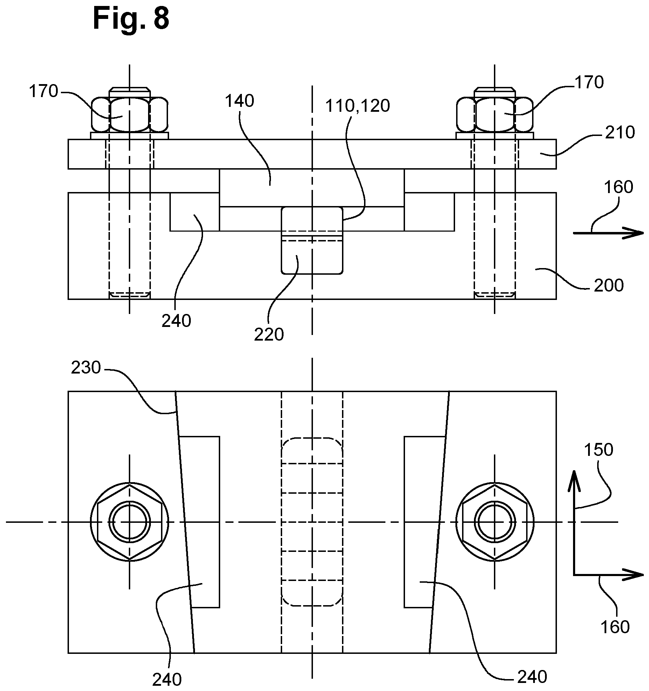

Figure 8 shows a further example, in which a circumferential relative position of the ground side part and the frame side part can be adjusted. In the following description the configuration of ground side part plate and frame side part plate can be exchanged.

Figure 8 shows the ground side part plate configured with a trapezoidal shaped slot. Within the trapezoidal slot, a further slot is provided for fittingly receiving a wedge shape or sawtooth shape key (220). The frame side part plate is provided with a slot for fittingly receiving a rectangular key. The rectangular key is provided on the side towards the ground side part plate with a wedge shape or sawtooth shape profile (110, 120). In a circumferential direction, the trapezoidal shaped slot dimension is larger than the rectangular key dimension. Two adjustment blocks (240) are fitted to fill the space between the trapezoidal shaped slot and the rectangular key. Consequently, circumferential forces can be transferred via the rectangular key and the adjustment blocks. A relative position between the frame side part plate and the ground side part plate can be adjusted by shifting the adjustment blocks in opposite directions in a radial direction.

A stator (180) of a vertical axis hydroelectric generator can be equipped with a stator frame as described beforehand, comprising at least one stator foot as described beforehand. Further, a vertical axis hydroelectric generator may be equipped with such a stator frame.

## Claims

1. Stator frame (10) for carrying a stator core (20) of a vertical axis hydroelectric generator, the stator frame comprising at least one stator foot (30) for supporting a weight force (40) of the stator frame,
the stator foot comprising a frame side part (50) and a ground side part (60) configured for slidably moving relative to each other,
**characterized in that**
the ground side part and the frame side part are shaped such that the weight force (40) exerted from the stator frame on the stator foot results in a reaction force (70) on the stator frame which is non-parallel to said weight force, preferably the reaction force having a radially outward oriented component.

2. Stator frame according to claim 1 comprising a plurality of stator feet for supporting the weight force of the stator frame,
the reaction forces of the stator feet on the stator frame being oriented to expand the stator frame in an outward radial direction (80).

3. Stator frame according to claim 1 or 2 wherein the ground side part and the frame side part are shaped such that a component of the reaction force on the stator frame is oriented in a radial direction of the stator frame, preferably in an outward radial direction.

4. Stator frame according to claim 1, 2 or 3 wherein the frame side part and the ground side part each comprise a sliding surface for said slidable movement relative to each other,
the ground side part sliding surface (90) and/or the frame side part sliding surface (100) comprising a wedge shape or tooth shape profile (110).

5. Stator frame according to claim 4 wherein the ground side part sliding surface and the frame side part sliding surface each comprise a wedge shape or tooth shape profile,
the wedge or tooth shape profiles being oriented such that the weight force exerted from the stator frame via the frame side part sliding surface on the ground slide part sliding surface results in a reaction force from the ground slide part sliding surface,
the reaction force being oriented in an outward radial direction of the stator frame.

6. Stator frame according to claim 4 or 5 wherein the ground side part sliding surface and/or the frame side part sliding surface comprise a plurality of wedge shape profiles or a sawtooth shape profile (120).

7. Stator frame according to at least one of claims 4 to 6 wherein a combination of a wedge angle (130) size and a friction coefficient is chosen such that a sliding relative movement occurs, preferably the wedge angle being 5° or more.

8. Stator frame according to one of claims 4 to 7 comprising a material to reduce friction, preferably a grease, a teflon or a deva material on the sliding surface for reducing a sliding friction.

9. Stator frame according to one of the preceding claims comprising a driving key (140) between the frame side part and the ground side part,
the key being configured to allow a radial (150) relative movement and to prevent a circumferential (160) relative movement between the frame side part and the ground side part.

10. Stator frame according to one of the preceding claims comprising a fixation bolt (170) between the frame side part and the ground side part configured for allowing radial and circumferential relative movement between the frame side part and the ground side part.

11. Stator frame according to one of claims 5, 6, 7 or 8 wherein the wedge shape profile or sawtooth profile of the ground side part and/or the frame side part is provided as a key insert.

12. Stator (180) of a vertical axis hydroelectric generator comprising a stator frame according to at least one of the preceding claims.

13. Vertical axis hydroelectric generator comprising a stator frame according to at least one of the preceding claims.

14. Vertical axis hydroelectric generator according to claim 13,
wherein the ground side part and the frame side part are shaped such that the reaction force has a radially outward oriented component,
wherein the ground side part and the frame side part are shaped such that the radially outward oriented force component has a size such that a thermal compression force on a stator lamination is lower than a force limit where a lamination buckling arises.

15. Method for refurbishing a vertical axis hydroelectric generator comprising the step of replacing a foot of a stator frame of the hydroelectric generator with a stator frame foot comprising a frame side part (50) and a ground side part (60) configured for slidably moving relative to each other,
wherein the ground side part and the frame side part are shaped such that a weight force (40) exerted from the stator frame on the stator foot results in a reaction force (70) on the stator frame which is non-parallel to said weight force, the reaction force having a radially outward oriented component.

## Patentansprüche

1. . Statorrahmen (10) zum Tragen eines Statorkerns (20) eines Wasserkraftgenerators mit vertikaler Achse, wobei der Statorrahmen mindestens einen Statorfuß (30) zum Stützen einer Gewichtskraft (40) des Statorrahmens umfasst,
wobei der Statorfuß einen rahmenseitigen Teil (50) und einen bodenseitigen Teil (60) umfasst, die zum gleitenden Bewegen in Bezug zueinander konfiguriert sind,
**dadurch gekennzeichnet, dass**
der bodenseitige Teil und der rahmenseitige Teil geformt sind, sodass die vom Statorrahmen auf den Statorfuß ausgeübte Gewichtskraft (40) eine Reaktionskraft (70) am Statorrahmen ergibt, die nicht parallel zur Gewichtskraft verläuft, wobei die Reaktionskraft vorzugsweise eine radial nach außen ausgerichtete Komponente aufweist.

2. . Statorrahmen nach Anspruch 1, umfassend eine Vielzahl von Statorfüßen zum Stützen der Gewichtskraft des Statorrahmens,
wobei die Reaktionskräfte der Statorfüße auf den Statorrahmen ausgerichtet sind, um den Statorrahmen in eine nach außen gerichtete radiale Richtung (80) auszudehnen.

3. . Statorrahmen nach Anspruch 1 oder 2, wobei der bodenseitige Teil und der rahmenseitige Teil geformt sind, sodass eine Komponente der Reaktionskraft auf den Statorrahmen in einer radialen Richtung des Statorrahmens, vorzugsweise in einer nach außen gerichteten radialen Richtung, ausgerichtet ist.

4. . Statorrahmen nach Anspruch 1, 2 oder 3, wobei der rahmenseitige Teil und der bodenseitige Teil jeweils eine Gleiobertfläche zum gleitenden Bewegen in Bezug zueinander umfassen,
wobei die Gleitoberfläche des bodenseitigen Teils (90) und/oder die Gleitoberfläche des rahmenseitigen Teils (100) ein Profil (110) in Keilform oder Zahnform umfassen.

5. . Statorrahmen nach Anspruch 4, wobei die Gleitoberfläche des bodenseitigen Teils und die Gleitoberfläche des rahmenseitigen Teils jeweils ein Profil in Keilform oder Zahnform umfassen,
wobei die Profile in Keil- oder Zahnform ausgerichtet sind, sodass die vom Statorrahmen über die Gleitoberfläche des rahmenseitigen Teils auf die Gleitoberfläche des bodenseitigen Teils ausgeübte Gewichtskraft eine Reaktionskraft von der Gleitoberfläche des bodenseitigen Teils ergibt,
wobei die Reaktionskraft in eine nach außen gerichteten radialen Richtung des Statorrahmens ausgerichtet ist.

6. . Statorrahmen nach Anspruch 4 oder 5, wobei die Gleitoberfläche des bodenseitigen Teils und/oder die Gleitoberfläche des rahmenseitigen Teils eine Vielzahl von Profilen in Keilform oder ein Profil in Sägezahnform (120) umfassen.

7. . Statorrahmen nach mindestens einem der Ansprüche 4 bis 6, wobei eine Kombination aus einer Größe des Keilwinkels (130) und einem Reibungskoeffizienten gewählt wird, sodass eine Gleitrelativbewegung auftritt, wobei der Keilwinkel vorzugsweise 5° oder mehr beträgt.

8. . Statorrahmen nach einem der Ansprüche 4 bis 7, umfassend ein Material, um Reibung zu verringern, vorzugsweise ein Schmierfett, Teflon oder ein Deva-Material, auf der Gleitoberfläche zum Verringern einer Gleitreibung.

9. . Statorrahmen nach einem der vorstehenden Ansprüche, umfassend einen Mitnehmerstein (140) zwischen dem rahmenseitigen Teil und dem bodenseitigen Teil,
wobei der Stein konfiguriert ist, um eine radiale Relativbewegung (150) zu ermöglichen und eine umfängliche Relativbewegung (160) zwischen dem rahmenseitigen Teil und dem bodenseitigen Teil zu verhindern.

10. . Statorrahmen nach einem der vorstehenden Ansprüche, umfassend eine Befestigungsschraube (170) zwischen dem rahmenseitigen Teil und dem bodenseitigen Teil, die konfiguriert ist, um eine radiale Relativbewegung und eine umfängliche Relativbewegung zwischen dem rahmenseitigen Teil und dem bodenseitigen Teil zu ermöglichen.

11. . Statorrahmen nach einem der Ansprüche 5, 6, 7 oder 8, wobei das Profil in Keilform oder das Profil in Sägezahnform des bodenseitigen Teils und/oder des rahmenseitigen Teils als Steineinsatz bereitgestellt ist.

12. . Stator (180) eines Wasserkraftgenerators mit vertikaler Achse, umfassend einen Statorrahmen nach mindestens einem der vorstehenden Ansprüche.

13. . Wasserkraftgenerator mit vertikaler Achse, umfassend einen Statorrahmen nach mindestens einem der vorstehenden Ansprüche.

14. . Wasserkraftgenerator mit vertikaler Achse nach Anspruch 13, wobei der bodenseitige Teil und der rahmenseitige Teil geformt sind, sodass die Reaktionskraft eine radial nach außen gerichtete Komponente aufweist,
wobei der bodenseitige Teil und der rahmenseitige Teil geformt sind, sodass die radial nach außen gerichtete Kraftkomponente eine Größe aufweist, sodass ein eine thermische Druckkraft auf einem Statorblech geringer ist als eine Kraftgrenze, bei der sich ein Knicken des Blechs ergibt.

15. . Verfahren zum Überholen eines Wasserkraftgenerators mit vertikaler Achse, umfassend den Schritt zum Ersetzen eines Fußes eines Statorrahmens des Wasserturbinengenerators durch einen Statorrahmenfuß, der einen rahmenseitigen Teil (50) und einen bodenseitigen Teil (60) umfasst, die konfiguriert sind, um in Bezug zueinander gleitend bewegbar zu sein,
wobei der bodenseitige Teil und der rahmenseitige Teil geformt sind, sodass eine vom Statorrahmen auf den Statorfuß ausgeübte Gewichtskraft (40) eine Reaktionskraft (70) am Statorrahmen ergibt, die nicht parallel zur Gewichtskraft verläuft, wobei die Reaktionskraft eine radial nach außen gerichtete Komponente aufweist.

## Revendications

1. Carcasse de stator (10) destinée à porter un noyau de stator (20) d'un générateur hydroélectrique à axe vertical, la carcasse de stator comportant au moins un pied de stator (30) pour supporter une force de pesanteur (40) de la carcasse de stator,
le pied de stator comportant une partie côté carcasse (50) et une partie côté sol (60) configurées pour se déplacer de manière coulissante l'une par rapport à l'autre,
**caractérisée en ce que**
la partie côté sol et la partie côté carcasse sont formées de sorte que la force de pesanteur (40) exercée par la carcasse de stator sur le pied de stator entraîne une force de réaction (70) sur la carcasse de stator qui n'est pas parallèle à ladite force de pesanteur, de préférence la force de réaction présentant une composante orientée radialement vers l'extérieur.

2. Carcasse de stator selon la revendication 1, comportant une pluralité de pieds de stator pour supporter la force de pesanteur de la carcasse de stator,
les forces de réaction des pieds du stator sur la carcasse de stator étant orientées de manière à élargir la carcasse de stator dans une direction radiale extérieure (80).

3. Carcasse de stator selon la revendication 1 ou 2, dans laquelle la partie côté sol et la partie côté carcasse sont formées afin qu'une composante de la force de réaction sur la carcasse de stator soit orientée dans une direction radiale de la carcasse de stator, de préférence dans une direction radiale extérieure.

4. Carcasse de stator selon la revendication 1, 2 ou 3, dans laquelle la partie côté carcasse et la partie côté sol comportent chacune une surface de glissement pour ledit mouvement coulissant l'une par rapport à l'autre,
la surface de glissement (90) de partie côté sol et/ou la surface de glissement (100) de partie côté carcasse comportant un profil cunéiforme ou en forme de dent (110).

5. Carcasse de stator selon la revendication 4, dans laquelle la surface de glissement de partie côté sol et la surface de glissement de partie côté carcasse comportent chacune un profil cunéiforme ou en forme de dent,
les profils cunéiformes ou en forme de dent étant orientés de telle sorte que la force de pesanteur exercée par la carcasse de stator via la surface de glissement de partie côté carcasse sur la surface de glissement de partie côté sol entraîne une force de réaction émanant de la surface de glissement de partie côté sol,
la force de réaction étant orientée dans une direction radiale extérieure de la carcasse de stator.

6. Carcasse de stator selon la revendication 4 ou 5, dans laquelle la surface de glissement de partie côté sol et/ou la surface de glissement de partie côté carcasse comportent une pluralité de profils cunéiformes ou un profil en dents de scie (120).

7. Carcasse de stator selon au moins l'une des revendications 4 à 6, dans laquelle une combinaison d'une taille d'angle de coin (130) et d'un coefficient de frottement est choisie afin qu'un mouvement coulissant relatif se produise, l'angle de coin étant de préférence supérieur ou égal à 5°.

8. Carcasse de stator selon l'une des revendications 4 à 7, comportant un matériau destiné à réduire la friction, de préférence une graisse, un téflon ou un matériau de type deva sur la surface de glissement afin de réduire la friction de glissement.

9. Carcasse de stator selon l'une des revendications précédentes, comportant une clavette d'entraînement (140) entre la partie côté carcasse et la partie côté sol,
la clavette étant configurée pour permettre un mouvement relatif radial (150) et pour empêcher un mouvement relatif circonférentiel (160) entre la partie côté carcasse et la partie côté sol.

10. Carcasse de stator selon l'une des revendications précédentes, comportant un boulon de fixation (170) entre la partie côté carcasse et la partie côté sol, configuré pour permettre un mouvement relatif radial et circonférentiel entre la partie côté carcasse et la partie côté sol.

11. Carcasse de stator selon l'une des revendications 5, 6, 7 ou 8, dans laquelle le profil cunéiforme ou le profil en dents de scie de la partie côté sol et/ou de la partie côté carcasse est conçu sous forme de pièce rapportée formant clavette.

12. Stator (180) d'un générateur hydroélectrique à axe vertical comportant une carcasse de stator selon au moins l'une des revendications précédentes.

13. Générateur hydroélectrique à axe vertical, comportant une carcasse de stator selon au moins l'une des revendications précédentes.

14. Générateur hydroélectrique à axe vertical selon la revendication 13, dans lequel la partie côté sol et la partie côté carcasse sont formées afin que la force de réaction présente une composante orientée radialement vers l'extérieur,
dans lequel la partie côté sol et la partie côté carcasse sont formées afin que la composante de force orientée radialement vers l'extérieur présente une taille telle qu'une force de compression thermique sur une tôle de stator soit inférieure à une limite de force à laquelle survient un gondolement de tôles.

15. Procédé de remise à neuf d'un générateur hydroélectrique à axe vertical, comportant l'étape de remplacement d'un pied d'une carcasse de stator du générateur hydroélectrique par un pied de carcasse de stator comportant une partie côté carcasse (50) et une partie côté sol (60) configurées pour se déplacer de manière coulissante l'une par rapport à l'autre,
dans lequel la partie côté sol et la partie côté carcasse sont formées de telle sorte qu'une force de pesanteur (40) exercée par la carcasse de stator sur le pied de stator entraîne une force de réaction (70) sur la carcasse de stator qui n'est pas parallèle à ladite force de pesanteur, la force de réaction présentant une composante orientée radialement vers l'extérieur.
